# EUROPÄISCHE PATENTSCHRIFT

(11) **EP 3 517 741 B1**
(45) Veröffentlichungstag und Bekanntmachung des Hinweises auf die Patenterteilung: **15.04.2020**
(21) Anmeldenummer: 18153876.0
(22) Anmeldetag: 29.01.2018
(51) Int. Cl.: F01D 25/28, F01D 9/04

(54) **VERFAHREN UND ANORDNUNG ZUM BEFESTIGEN EINER VIELZAHL VON GLEICHARTIGEN BAUTEILEN**
METHOD AND ASSEMBLY FOR FIXING A NUMBER OF SIMILAR COMPONENTS
PROCÉDÉ ET DISPOSITIF DE FIXATION D'UNE PLURALITÉ DE COMPOSANTS ANALOGUES

(43) Veröffentlichungstag der Anmeldung: 31.07.2019
(73) Patentinhaber: Siemens Aktiengesellschaft, 80333 München (DE)
(72) Erfinder: Eidenberger, Robert, 81539 München (DE)

(56) Entgegenhaltungen:
- EP-A1- 3 023 735
- DE-A1-102016 109 429

## Beschreibung

Die Erfindung betrifft ein Verfahren und eine Anordnung zum Befestigen einer Vielzahl von gleichartigen Bauteilen durch kraftschlüssige Verspannung mittels unterschiedlicher Stemmstücke.

Eine Befestigung von Bauteilen mittels Stemmstücken wird bei vielen Produktionsprozessen eingesetzt. Ein Beispiel hierfür ist das Einsetzen von Turbinenschaufeln in Turbinen. Dabei wird - in der Regel manuell - eine Vielzahl von Turbinenschaufeln jeweils über ein passendes, in eine Nut der Turbine eingelegtes Stemmstück gehämmert, um so eine kraftschlüssige Verspannung von Stemmstück, Turbinenschaufel und Nut zu erzielen. Es handelt sich hierbei um eine Übermaßpassung bzw. Presspassung, d.h. das jeweilige Stemmstück ist jeweils etwas dicker als der freie Spalt.

Aufgrund von Fertigungsungenauigkeiten der Turbinenschaufeln und der aufnehmenden Nut sind für eine sichere Befestigung der Turbinenschaufeln in der Regel Stemmstücke geringfügig unterschiedlicher Größe erforderlich. Während ein zu kleines Stemmstück in der Regel keine zuverlässige Befestigung der Turbinenschaufel erlaubt, kann ein zu großes Stemmstück den Verspannungsvorgang erschweren oder die Turbinenschaufel beschädigen. In beiden Fällen ist die Turbinenschaufel wieder herauszuhämmern, ein neues Stemmstück zu wählen und die Turbinenschaufel über das neue Stemmstück zu hämmern. Hinzu kommt, dass eine falsche Dimensionierung eines Stemmstücks häufig erst spät erkannt wird.

Aus dem Dokument DE2016109429A1 sind eine Vorrichtung und ein Verfahren zum Zusammenklemmen zweier Bauteile bekannt, durch die eine Klemmkraft verhältnismäßig genau eingestellt werden kann. Die dargestellte Technik ist jedoch kaum dazu geeignet, eine Vielzahl von Bauteilen zu verklemmen.

Weiterhin ist aus dem Dokument EP3023735A1 eine Messeinrichtung zur Positionskontrolle von ringförmig angeordneten Bauteilen eines ringförmigen Aufbaus bekannt. Eine geeignete Auswahl unterschiedlicher Stemmstücke zur Befestigung von Bauteilen wird allerdings nicht weiter thematisiert.

Es ist Aufgabe der vorliegenden Erfindung, ein effizienteres Verfahren sowie eine effizientere Anordnung zum Befestigen einer Vielzahl von gleichartigen Bauteilen mittels unterschiedlicher Stemmstücke anzugeben.

Gelöst wird diese Aufgabe durch ein Verfahren mit den Merkmalen des Patentanspruchs 1, durch eine Anordnung mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zum Befestigen einer Vielzahl von gleichartigen Bauteilen durch Verspannung mittels unterschiedlicher Stemmstücke wird erfindungsgemäß ein erstes Bauteil durch einen Aktuator gegen ein erstes Stemmstück kraftschlüssig verspannt. Dabei wird durch einen ersten Sensor während des Verspannungsvorgangs ein erster Verspannungsparameter gemessen. Abhängig vom ersten Verspannungsparameter wird dann ein zweites Stemmstück selektiert, gegen das ein zweites Bauteil durch den Aktuator kraftschlüssig verspannt wird.

Als Verspannungsparameter kann insbesondere eine beim Verspannen auftretende und/oder aufzubringende Kraft, ein Druck, eine Deformation, ein Verschiebeweg, ein Abstand und/oder ein anderer für den Verspannungsvorgang relevanter physikalischer Parameter vorzugsweise am Stemmstück und/oder am Bauteil gemessen werden.

Zum Ausführen des erfindungsgemäßen Verfahrens sind eine Anordnung zum Befestigen einer Vielzahl von gleichartigen Bauteilen, ein Computerprogrammprodukt sowie ein computerlesbares Speichermedium vorgesehen.

Durch die Erfindung können beim Befestigen eines ersten Bauteils gemessene Sensordaten zur Auswahl eines für das nächste Bauteil zu verwendenden Stemmstücks in vorteilhafter Weise genutzt werden. Dieser Vorteil beruht auf der häufig vorliegenden Situation, dass gleichartige Bauteile meist in Chargen gefertigt werden und dass Fertigungsvariationen aufeinanderfolgend gefertigter Bauteile einer Charge meist gering und miteinander korreliert sind. Insbesondere lassen sich Fertigungsvariationen einer Charge häufig gut auf das jeweils nächste Bauteil dieser Charge extrapolieren. Dies erlaubt eine automatisierte und vorteilhafte Auswahl von Stemmstücken und damit eine effiziente Befestigung von derartigen Bauteilen mit nur geringen Variationen der Befestigungsqualität.

Vorteilhafte Ausführungsformen und Weiterbildungen der Erfindung sind in den abhängigen Ansprüchen angegeben.

Nach einer vorteilhaften Ausführungsform der Erfindung kann während des Verspannungsvorgangs ein zeitlicher und/oder wegabhängiger Verlauf des ersten Verspannungsparameters gemessen und ausgewertet werden. Die Selektion des zweiten Stemmstücks kann dann abhängig vom erfassten Verlauf erfolgen. Insbesondere kann als Verlauf des ersten Verspannungsparameters eine Druckkraft als Funktion eines Verschiebewegs des ersten Bauteils und/oder des ersten Stemmstücks gemessen werden. Anhand eines solchen Verlaufs kann ein unpassendes Stemmstück schon frühzeitig während des Verspannungsvorgangs erkannt und ggf. ausgewechselt werden.

Weiterhin kann der erste Verspannungsparameter mit einem oder mehreren vorgegebenen Soll-Verspannungsparametern verglichen werden. Die Selektion des zweiten Stemmstücks kann dann abhängig vom Vergleichsergebnis und insbesondere abhängig von einer Abweichung zwischen dem ersten Verspannungsparameter und einem Soll-Verspannungsparameter erfolgen. Vorzugsweise kann ein zeitlicher und/oder wegabhängiger Verlauf des ersten Verspannungsparameters kontinuierlich mit einem vorgegebenen Sollverlauf verglichen werden. Insbesondere kann für den vorgegebenen Soll-Verspannungsparameter oder den vorgegebenen Sollverlauf auch ein Toleranzbereich vorgegeben und mit dem ersten Verspannungsparameter verglichen werden.

Nach einer vorteilhaften Ausführungsform der Erfindung kann aus dem ersten Verspannungsparameter und einem oder mehreren früher gemessenen Verspannungsparametern ein Änderungstrend für den Verspannungsparameter ermittelt werden. Die Selektion des zweiten Stemmstücks kann dann abhängig vom Änderungstrend erfolgen. Der Änderungstrend kann beispielsweise durch Differenzbildung oder durch lineare oder nichtlineare Regression ermittelt werden. Vorzugsweise kann anhand des Änderungstrends ein Verspannungsparameter für das zweite Bauteil extrapoliert werden. Der extrapolierte Verspannungsparameter kann dann mit dem Soll-Verspannungsparameter und ggf. dessen Toleranzbereich verglichen werden. Eine derartige Extrapolation führt in vielen Fällen zur Auswahl eines besser geeigneten Stemmstücks für das zweite Bauteil.

Weiterhin kann geprüft werden, ob der Änderungstrend ein vorgegebenes Unstetigkeitskriterium erfüllt. Falls dies zutrifft kann die Selektion des zweiten Stemmstücks modifiziert werden. Zur Erkennung einer derartigen Unstetigkeit können beispielsweise aufeinanderfolgende Änderungen des Verspannungsparameters und/oder eine Abweichung eines gemessenen Verspannungsparameters vom extrapolierten Verspannungsparameter bewertet werden. Eine derartige Unstetigkeit kann als Indiz für einen Chargenwechsel oder eine andere Änderung des Fertigungsprozesses für die Bauteile gewertet werden. In solchen Fällen ist es häufig vorteilhaft, das Selektionsverfahren zu wechseln oder anderweitig zu modifizieren.

Nach einer weiteren vorteilhaften Ausführungsform der Erfindung kann durch einen zweiten Sensor ein Befestigungsparameter des ersten Bauteils gemessen werden. Die Selektion des zweiten Stemmstücks kann dann abhängig vom Befestigungsparameter erfolgen. Als Befestigungsparameter kann insbesondere ein Abstand, eine Position, eine Orientierung, eine Spaltbreite oder ein Formschluss bezüglich vorhergehend befestigter Bauteile gemessen werden. Alternativ oder zusätzlich kann der Befestigungsparameter eine Fixierung, ein Spiel, eine Beweglichkeit, eine Deformation und/oder eine mechanische Spannung des ersten Bauteils betreffen. Vorzugsweise kann der Befestigungsparameter eine Befestigungsqualität quantifizieren. Die Befestigungsqualität kann hierbei z.B. eine Fixierung, eine Abweichung vom Soll und/oder eine Zuverlässigkeit der Befestigung betreffen.

Nach einer vorteilhaften Weiterbildung der Erfindung kann eine maschinelle Lernroutine für die unterschiedlichen Stemmstücke anhand einer Vielzahl von gemessenen Verspannungsparametern und Befestigungsparametern darauf trainiert werden, Verspannungsparameter zu ermitteln, die eine Befestigungsqualität optimieren. Der erste Verspannungsparameter kann dann mit dem die Befestigungsqualität für das erste Stemmstück optimierenden Verspannungsparameter verglichen werden und die Selektion des zweiten Stemmstücks abhängig vom Vergleichsergebnis erfolgen. Maschinelle Lernroutinen können mittels Standardverfahren des maschinellen Lernens effizient darauf trainiert werden, auch nichtlineare Einflüsse auf die Befestigungsqualität zu erkennen und abzubilden. Auf diese Weise lässt sich eine Prognose einer geeigneten Stemmstückgröße und damit eine Befestigungsqualität in der Regel erheblich verbessern.

Weiterhin kann der Aktuator derart angesteuert werden, dass abhängig vom ersten Verspannungsparameter der Verspannungsvorgang des zweiten Bauteils gegenüber dem Verspannungsvorgang des ersten Bauteils verändert wird.

Darüber hinaus kann geprüft werden, ob der erste Verspannungsparameter, der Befestigungsparameter oder deren jeweiliger Verlauf in einem vorgegebenen Toleranzbereich liegt. Infolge eines negativen Prüfungsergebnisses kann das erste Stemmstück mittels des Aktuators entfernt werden und abhängig vom ersten Verspannungsparameter ein zweites Stemmstück selektiert werden. Mittels des Aktuators kann dann das erste Bauteil gegen das selektierte zweite Stemmstück kraftschlüssig verspannt werden. Zum Entfernen des ersten Stemmstücks kann der Aktuator zur beidseitigen Kraftaufbringung auf das erste Stemmstück und/oder das erste Bauteil ausgestaltet sein.

Ausführungsbeispiele der Erfindung werden nachfolgend anhand der Zeichnungen näher erläutert. Dabei zeigen jeweils in schematischer Darstellung:
- Figur 1: eine mittels eines Stemmstücks in einem Turbinenschaufelträger befestigte Turbinenschaufel,
- Figur 2: eine Anordnung zum Befestigen von Turbinenschaufeln gemäß einem ersten Ausführungsbeispiel der Erfindung und
- Figur 3: eine Anordnung zum Befestigen von Turbinenschaufeln gemäß einem zweiten Ausführungsbeispiel der Erfindung.

Als Anwendungsbeispiel für eine erfindungsgemäße Befestigung einer Vielzahl gleichartiger Bauteile durch Stemmstücke wird im Folgenden eine Befestigung von Turbinenschaufeln an einem Schaufelträger einer Dampfturbine beschrieben. Hierbei werden in einer Nut an der Innenseite eines ringförmigen Turbinenschaufelträgers eine Vielzahl gleichartiger Turbinenschaufeln eingesetzt und mittels Stemmstücken kraftschlüssig verspannt. Um unvermeidliche Fertigungstoleranzen der Turbinenschaufeln auszugleichen, sind hierzu Stemmstücke geringfügig unterschiedlicher Größe vorgesehen. Durch die Erfindung werden insbesondere die Auswahl eines jeweils geeigneten Stemmstücks und damit der Befestigungsvorgang verbessert.

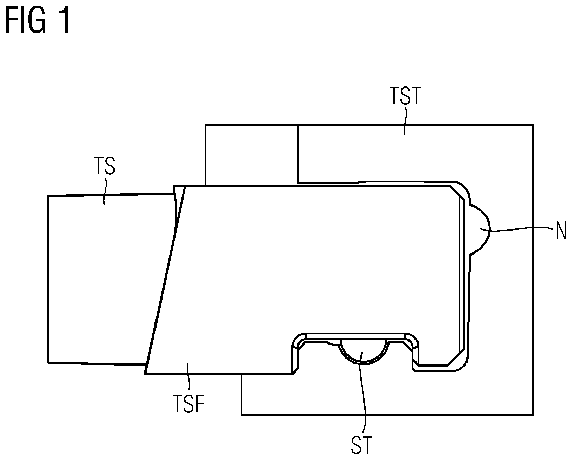

Figur 1 zeigt eine mittels eines Stemmstücks ST in einem Turbinenschaufelträger TST befestigte Turbinenschaufel TS in schematischer Darstellung. Das Stemmstück ST dient zum kraftschlüssigen Verspannen gegen einen Turbinenschaufelfuß TSF der Turbinenschaufel TS innerhalb des Turbinenschaufelträgers TST. Zu diesem Zweck wird das Stemmstück ST in eine dafür vorgesehene Nut des Turbinenschaufelträgers TST eingesetzt. Nach dem Einsetzen des Stemmstücks ST wird die Turbinenschaufel TS mit ihrem Turbinenschaufelfuß TSF in den Turbinenschaufelträger TST eingeführt und über das Stemmstück ST geschoben und/oder gehämmert, so dass der Turbinenschaufelfuß TSF und das Stemmstück ST kraftschlüssig aufeinander gepresst werden. Die Größe des Stemmstücks ST ist dabei so zu wählen, dass der Turbinenschaufelfuß TSF sicher und ohne Spiel im Turbinenschaufelträger TST fixiert wird. Eine weitere Nut N dient zum nachfolgenden Einschieben oder Einhämmern eines weiteren Stemmstücks (nicht dargestellt).

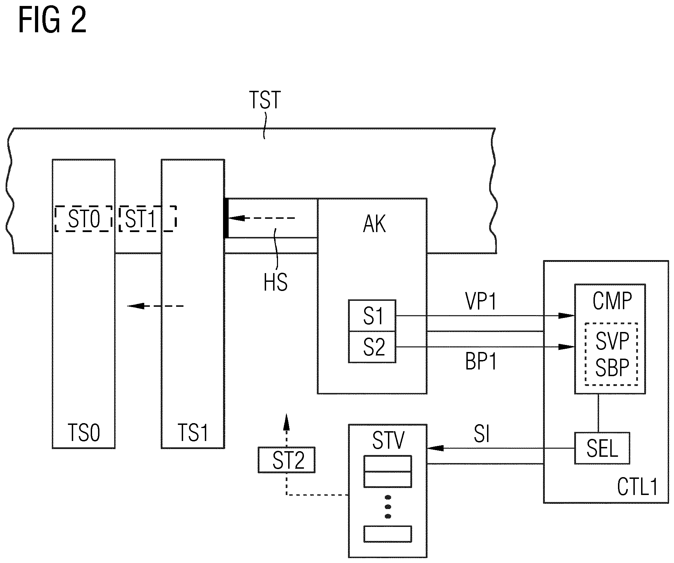

Figur 2 zeigt eine Anordnung zum Befestigen von Turbinenschaufeln in einem Turbinenschaufelträger TST gemäß einem ersten Ausführungsbeispiel der Erfindung in schematischer Darstellung. Ein jeweiliger Turbinenschaufelfuß der Turbinenschaufeln sowie eine Nut für die Stemmstücke sind aus Übersichtlichkeitsgründen nicht gesondert dargestellt.

Als zu befestigendes, erstes Bauteil ist eine Turbinenschaufel TS1 einer Vielzahl von gleichartigen Turbinenschaufeln zur Verspannung über ein erstes Stemmstück ST1 zu schieben. Das erste Stemmstück ST1 ist dabei aus einer Vielzahl von Stemmstücken geringfügig unterschiedlicher Größe eines Stemmstückvorrats STV ausgewählt. Das erste Stemmstück ST1 ist in eine dafür vorgesehene Nut des Turbinenschaufelträgers TST eingesetzt und dient zum kraftschlüssigen Verspannen des Schaufelfußes der Turbinenschaufel TS1 im Turbinenschaufelträger TST. Die Turbinenschaufel TS1 ist so weit über das erste Stemmstück ST1 zu schieben, bis sie an eine bereits vorher mittels eines Stemmstücks ST0 im Turbinenschaufelträger TST befestigte Turbinenschaufel TS0 anschließt.

Die erfindungsgemäße Anordnung verfügt über eine Steuereinrichtung CTL1 zum Steuern des Befestigungsverfahrens. Die Steuereinrichtung CTL1 umfasst einen oder mehrere Prozessoren zum Ausführen der Verfahrensschritte der Steuereinrichtung CTL1 sowie einen oder mehrere Speicher und/oder eine Datenbank zum Speichern von durch die Steuereinrichtung CTL1 zu verarbeitenden Daten.

Die Steuereinrichtung CTL1 ist mit dem Stemmstückvorrat STV und mit einem hydraulischen Aktuator AK gekoppelt. Die Steuereinrichtung CTL1 steuert insbesondere eine Selektion eines passenden Stemmstücks aus dem Stemmstückvorrat STV sowie einen jeweiligen Verspannungsvorgang einer jeweiligen Turbinenschaufel gegen ein jeweiliges Stemmstück.

Der hydraulische Aktuator AK schiebt mit Hilfe eines Hydraulikstempels HS eine zu befestigende Turbinenschaufel, hier TS1, im Turbinenschaufelträger TST über ein in dessen Nut eingelegtes Stemmstück, hier ST1, und verspannt hierdurch die Turbinenschaufel TS1 gegen das Stemmstück ST1 in kraftschlüssiger Weise. Der Aktuator AK kann die Turbinenschaufel TS1 durch kontinuierliche Kraftaufbringung und/oder durch Hammerschläge verschieben und zwar so weit, bis sie an eine vorher befestigte Turbinenschaufel, hier TS0, anschließt. Alternativ oder zusätzlich kann als Aktuator AK ein pneumatischer und/oder magnetischer Aktuator eingesetzt werden.

Zum Befördern eines jeweiligen Stemmstücks vom Stemmstückvorrat STV in die dafür vorgesehene Nut des Turbinenschaufelträger TST, zum Einführen einer jeweiligen Turbinenschaufel in den Turbinenschaufelträger TST sowie zum Nachführen des Aktuators AK kann ein Roboter (nicht dargestellt) oder ein anderer Manipulator vorgesehen sein.

Während des Verspannungsvorgangs der Turbinenschaufel TS1 misst ein erster Sensor S1 einen ersten Verspannungsparameter VP1. Als erster Verspannungsparameter VP1 kann z.B. eine beim Verspannungsvorgang auftretende und/oder aufzubringende Kraft, ein Druck, ein Verschiebeweg, eine Verschiebezeit oder ein anderer für den Verspannungsvorgang relevanter physikalischer Parameter gemessen werden. Entsprechend kann der erste Sensor S1 als Kraftsensor, Drucksensor, Positionssensor oder anderer Verspannungssensor ausgestaltet sein. Vorzugsweise ist der erste Sensor S1 im Aktuator AK integriert.

Insbesondere kann durch den ersten Sensor S1 als erster Verspannungsparameter VP1 eine vom Aktuator AK aufgebrachte Druckkraft als Funktion eines Verschiebewegs der Turbinenschaufel TS1, d.h. ein Kraft-Weg-Verlauf gemessen werden.

Der erste Verspannungsparameter VP1 bzw. dessen Verlauf wird zur Auswertung zur Steuereinrichtung CTL1 übermittelt. In einem Vergleichsmodul CMP der Steuereinrichtung CTL1 wird der Spannungsparameter VP1 bzw. dessen Verlauf mit einem vorgegebenen Soll-Verspannungsparameter SVP bzw. mit einem entsprechenden Sollverlauf verglichen.

Der Soll-Verspannungsparameter SVP kann z.B. eine gewünschte Kraft, einen Druck, einen Verschiebeweg, eine Verschiebezeit oder einen anderen für den Verspannungsvorgang relevanten physikalischen Parameter vorzugsweise jeweils für unterschiedliche Schaufel-Nut-Kombinationen und unterschiedliche Werkstoffe angeben. Vorteilhafterweise ist für den Soll-Verspannungsparameter SVP zusätzlich ein Toleranzbereich vorgegeben. Insbesondere kann der Soll-Verspannungsparameter SVP eine vom Aktuator AK aufzubringende Druckkraft als Funktion des Verschiebewegs vorgeben, d.h. einen Soll-Kraft-Weg-Verlauf. Der Verlauf des ersten Verspannungsparameters VP1 kann dann kontinuierlich mit dem Verlauf des Soll-Verspannungsparameters SVP und ggf. mit dessen Toleranzbereich bzw. dessen Verlauf verglichen werden. Insbesondere kann dabei aus einer Abweichung des ersten Verspannungsparameters VP1 vom Soll-Verspannungsparameter SVP eine Qualität der Befestigung ermittelt werden.

Alternativ oder zusätzlich zu einem direkten Vergleich des ersten Verspannungsparameters VP1 mit dem Soll-Verspannungsparameter SVP kann der erste Verspannungsparameter VP1 anhand von Verspannungsparametern, die beim Verspannen früher befestigter Bauteile, hier TS0, gemessen wurden, extrapoliert werden und das Extrapolationsergebnis mit dem Soll-Verspannungsparameter SVP bzw. dem zugehörigen Toleranzbereich verglichen werden. Zu diesem Zweck kann anhand der früher gemessenen Verspannungsparameter ein Änderungstrend, z.B. durch lineare oder nichtlineare Regression ermittelt werden. Anhand des ermittelten Änderungstrends wird vorzugsweise der bei der nächsten zu befestigenden Turbinenschaufel zu erwartende Verspannungsparameter extrapoliert. Eine Verwendung eines extrapolierten Werts für den Verspannungsparameter liefert häufig bessere Ergebnisse als eine direkte Verwendung des zuletzt gemessenen Verspannungsparameters, hier VP1. Dies kann darauf zurückgeführt werden, dass Turbinenschaufeln in der Regel sukzessive in Chargen gefertigt werden. Bei aufeinanderfolgend gefertigten Turbinenschaufeln sind Fertigungsvariationen in der Regel gering und verändern sich meist in gleichmäßiger oder stetiger Weise, z.B. weil ein Werkzeug sich im Laufe der Zeit stetig abnutzt.

Vorteilhafterweise wird geprüft, ob der ermittelte Änderungstrend ein Unstetigkeitskriterium erfüllt. Zur Erkennung einer solchen Unstetigkeit kann z.B. eine Abweichung des gemessenen Verspannungsparameters VP1 vom extrapolierten Wert mit einem Schwellwert verglichen werden. Bei Überschreitung des Schwellwerts kann dann eine Unstetigkeit signalisiert werden. Eine derartige Unstetigkeit kann als Indiz für einen Chargenwechsel oder eine andere Änderung des Fertigungsprozesses für die Turbinenschaufeln gewertet werden.

Zur Bewertung der Befestigung der Turbinenschaufel TS1 wird durch einen zweiten Sensor S2 ein Befestigungsparameter BP1 der Turbinenschaufel TS1 gemessen. Der Befestigungsparameter BP1 kann z.B. einen Abstand, eine Position, eine Orientierung, eine Spaltbreite oder einen Formschluss, insbesondere bezüglich vorhergehend befestigter Bauteile oder anderen Teilen des Turbinenschaufelträgers TST oder der Turbine angeben. Alternativ oder zusätzlich kann der Befestigungsparameter BP1 eine Fixierung, ein Spiel, eine Beweglichkeit, eine Deformation und/oder eine mechanische Spannung betreffen. Vorzugsweise kann der zweite Sensor S2 als aktiver Sensor ausgestaltet sein, der eine Kraft auf die Turbinenschaufel TS1 und/oder das Stemmstück ST1 aufbringt und dabei eine Verformung und/oder Beweglichkeit des verspannten Bauteils misst. Der zweite Sensor S2 kann insbesondere im Aktuator AK integriert sein.

Im vorliegenden Ausführungsbeispiel wird als Befestigungsparameter BP1 durch den zweiten Sensor S2 eine Verspannung, z.B. eine Kraft, ein Anpressdruck und/oder eine Deformation der befestigten Turbinenschaufel TS1 und/oder des Stemmstücks ST1 gemessen. Vorzugsweise greift der zweite Sensor S2 hierzu auf Messwerte des ersten Sensors S1 zurück oder ist mit diesem teilweise oder ganz identisch.

Anhand des Befestigungsparameters BP1 und früher gemessenen Befestigungsparametern kann vorzugsweise ein beim nächsten Bauteil zu erwartender Befestigungsparameter extrapoliert werden.

Der Befestigungsparameter BP1 wird zur Steuereinrichtung CTL1 zur Auswertung übermittelt. Die Steuereinrichtung CTL1 ermittelt anhand des Befestigungsparameters BP1 insbesondere eine Befestigungsqualität der aktuell befestigten Turbinenschaufel TS1. Die Befestigungsqualität kann hierbei insbesondere eine Fixierung, eine Abweichung vom Soll und/oder eine Zuverlässigkeit der Befestigung betreffen oder quantifizieren.

Im Vergleichsmodul CMP der Steuereinrichtung CTL1 wird der Befestigungsparameter BP1 mit einem vorgegebenen Soll-Befestigungsparameter SBP verglichen. Der Soll-Befestigungsparameter SBP ist vorzugsweise jeweils für unterschiedliche Schaufel-Nut-Kombinationen und unterschiedliche Werkstoffe vorgegeben. Alternativ oder zusätzlich kann ein jeweiliger Toleranzbereich für einen jeweiligen Soll-Befestigungsparameter SBP vorgegeben sein.

Abhängig von einer Abweichung zwischen dem ersten Verspannungsparameter VP1 oder dem extrapolierten Verspannungsparameter und dem Soll-Verspannungsparameter SVP bzw. zwischen deren jeweiligem Verlauf wird durch das Vergleichsmodul CMP ein mit diesem gekoppeltes Selektionsmodul SEL angesteuert. Vorzugsweise kann dabei auch eine Abweichung zwischen dem Befestigungsparameter BP1 oder dem extrapolierten Befestigungsparameter und dem Soll-Befestigungsparameter SBP berücksichtigt werden.

Das Selektionsmodul SEL ist Teil der Steuereinrichtung CTL1 und dient zum Selektieren eines passenden Stemmstücks zum Verspannen des jeweils nächsten zu befestigenden Bauteils, hier der nach der Turbinenschaufel TS1 zu befestigenden Turbinenschaufel (nicht dargestellt). Im vorliegenden Ausführungsbeispiel wird hierfür ein zweites Stemmstück ST2 durch das Selektionsmodul SEL selektiert. Die Selektion kann hierbei derart erfolgen, dass bei einem gegenüber dem Soll-Verspannungsparameter SVP erhöhten Verspannungsparameter VP1 ein gegenüber dem aktuellen Stemmstück, hier ST1, kleineres Stemmstück, hier ST2, selektiert wird und bei einer geringeren Verspannung entsprechend ein größeres Stemmstück.

Bei Feststellung einer Unstetigkeit im Trend der Verspannungsparameter oder Befestigungsparameter kann zudem die Selektion modifiziert werden. So kann in diesem Fall eine Extrapolation unterdrückt werden, ein Selektionsparameter geändert werden und/oder ein Selektionsverfahren gewechselt werden.

Im Rahmen der Auswahl des Stemmstücks wird durch das Selektionsmodul SEL eine Selektionsinformation SI generiert, die das jeweils selektierte Stemmstück, hier ST2, und insbesondere dessen Größe angibt. Diese Selektionsinformation SI wird vom Selektionsmodul SEL zum Stemmstückvorrat STV übermittelt und veranlasst diesen, das durch die Selektionsinformation SI identifizierte Stemmstück, hier ST2, bereitzustellen. Das selektierte Stemmstück ST2 wird anschließend zur Befestigung der nächsten Turbinenschaufel (nicht dargestellt) verwendet.

Vorzugsweise kann auch der Verspannungsvorgang selbst in Abhängigkeit vom ersten Verspannungsparameter VP1 und/oder vom Befestigungsparameter BP1 beim Verspannen des nächsten Bauteils verändert werden. So kann beispielsweise, wenn der erste Verspannungsparameter VP1 einen erhöhten Kraftaufwand anzeigt, beim Verspannen der nächsten Turbinenschaufel eine Verschiebegeschwindigkeit des Aktuators AK herabgesetzt werden.

Darüber hinaus wird vorzugsweise geprüft, ob der erste Verspannungsparameter VP1 und/oder der Befestigungsparameter BP1 außerhalb eines jeweiligen Toleranzbereiches des Soll-Verspannungsparameters bzw. Soll-Befestigungsparameters liegt. Falls dies zutrifft, wird das erste Stemmstück ST1 mittels des Aktuators wieder entfernt und stattdessen ein neues Stemmstück selektiert, eingesetzt und verspannt. Zu diesem Zweck kann der Aktuator AK zur beidseitigen Kraftaufbringung bzw. zum beidseitigen Hämmern auf die jeweilige Turbinenschaufel und/oder das jeweilige Stemmstück ausgestaltet sein.

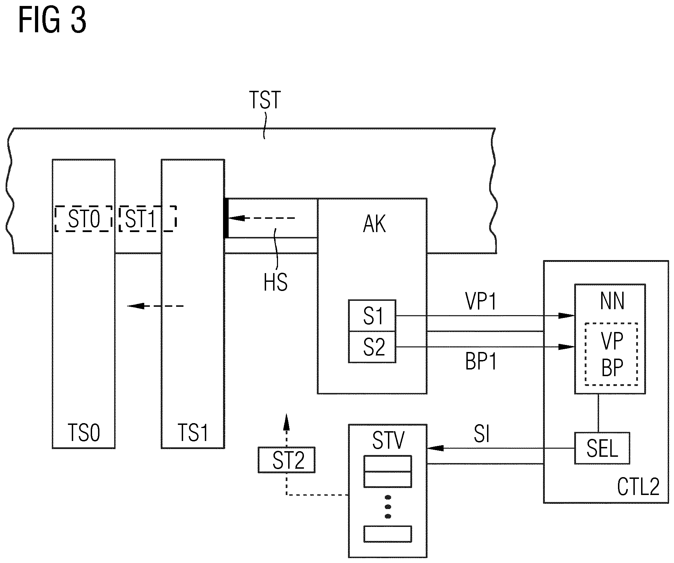

Figur 3 zeigt eine Anordnung zum Befestigen von Turbinenschaufeln in einem Turbinenschaufelträger TST gemäß einem zweiten Ausführungsbeispiel der Erfindung in schematischer Darstellung.

Insofern in Figur 3 die gleichen Bezugszeichen wie in Figur 2 verwendet werden, bezeichnen diese Bezugszeichen die gleichen Entitäten. Diese Entitäten können im Funktionszusammenhang von Figur 3 wie im Zusammenhang mit Figur 2 beschrieben implementiert oder realisiert werden.

Das zweite Ausführungsbeispiel unterscheidet sich vom ersten Ausführungsbeispiel durch eine unterschiedlich implementierte, zweite Steuereinrichtung CTL2. Ebenso wie die erste Steuereinrichtung CTL1 dient die zweite Steuereinrichtung CTL2 zum Steuern des Befestigungsverfahrens. Sie umfasst einen oder mehrere Prozessoren zum Ausführen der Verfahrensschritte der Steuereinrichtung CTL2 sowie einen oder mehrere Speicher und/oder eine Datenbank zum Speichern von durch die Steuereinrichtung CTL2 zu verarbeitenden Daten. Insbesondere kann die zweite Steuereinrichtung CTL2 in dem durch Figur 2 veranschaulichten, ersten Ausführungsbeispiel anstelle der Steuereinrichtung CTL1 eingesetzt werden.

Darüber hinaus umfasst die zweite Steuereinrichtung CTL2 ein künstliches neuronales Netz NN sowie ein damit gekoppeltes Selektionsmodul SEL. Das Selektionsmodul SEL dient wie das Selektionsmodul der Steuereinrichtung CTL1 zum Selektieren eines passenden Stemmstücks, hier ST2, zum Verspannen des jeweils nächsten zu befestigenden Bauteils, hier der nächsten Turbinenschaufel (nicht dargestellt).

Die Selektion erfolgt anhand des durch den ersten Sensor S1 gemessenen, ersten Verspannungsparameters VP1 sowie des durch den zweiten Sensor S2 gemessenen Befestigungsparameters BP1, die zu diesem Zweck zum neuronalen Netz NN übermittelt und von diesem ausgewertet werden.

Mittels des neuronalen Netzes NN wird eine maschinelle Lernroutine implementiert. Das neuronale Netz NN wird für die unterschiedlichen Stemmstücke des Stemmstückvorrats STV anhand einer Vielzahl von gemessenen Verspannungsparametern VP und BP trainiert. Vorzugsweise erfolgt das Training jeweils für unterschiedliche Schaufel-Nut-Kombinationen, sowie für unterschiedliche Werkstoffe. Zum Training des neuronalen Netzes NN kann auf eine Vielzahl von dem Fachmann bekannten Standardverfahren des maschinellen Lernens zurückgegriffen werden. Die zum Training des neuronalen Netzes NN verwendeten Trainingsdaten VP und BP sind in Figur 3 durch ein punktiertes Rechteck angedeutet.

Mittels der Verspannungsparameter VP und der Befestigungsparameter BP wird das neuronale Netz NN darauf trainiert, diejenigen Verspannungsparameter zu ermitteln, die eine Befestigungsqualität optimieren. Die Befestigungsqualität kann dabei wie oben beschrieben definiert sein. Vorzugsweise wird das neuronale Netz NN mit jeweils aktuell gemessenen Verspannungsparametern und Befestigungsparametern, hier VP1 und BP1, fortlaufend weiter trainiert.

Die ermittelten optimierenden Verspannungsparameter haben im zweiten Ausführungsbeispiel eine analoge Funktion wie die Soll-Verspannungsparameter SVP im ersten Ausführungsbeispiel. Entsprechend kann die Selektion des nächsten zu verwendenden Stemmstücks derart erfolgen, dass bei einer gegenüber dem optimierenden Verspannungsparameter erhöhten Verspannung VP1 ein gegenüber dem aktuellen Stemmstück ST1 kleineres Stemmstück, hier ST2, selektiert wird und bei einer geringeren Verspannung entsprechend ein größeres Stemmstück.

Zur Auswahl des Stemmstücks wird durch das Selektionsmodul SEL wie im ersten Ausführungsbeispiel eine Selektionsinformation SI generiert, die das jeweils selektierte Stemmstück, hier ST2, und insbesondere dessen Größe angibt. Die Selektionsinformation SI wird vom Selektionsmodul SEL zum Stemmstückvorrat STV übermittelt und veranlasst diesen, das durch die Selektionsinformation SI identifizierte Stemmstück ST2 bereitzustellen.

Das Selektionsverfahren mittels des neuronalen Netzes NN gemäß dem zweiten Ausführungsbeispiel kann auch mit dem Selektionsverfahren gemäß dem ersten Ausführungsbeispiel kombiniert werden. Insbesondere können bei der Selektion neben den durch das neuronalen Netz NN ermittelten optimierenden Verspannungsparametern auch Soll-Verspannungsparameter oder Soll-Befestigungsparameter berücksichtigt werden.

Erfindungsgemäß lassen sich die beim Verspannen des aktuellen Bauteils gemessenen Sensordaten meist vorteilhaft zur Selektion des für das nächste Bauteil zu verwendenden Stemmstücks nutzen, da die Fertigungsvariationen von aufeinanderfolgend gefertigten Turbinenschaufeln oder anderen Bauteilen häufig korreliert sind. Dies erlaubt eine automatisierte und vorteilhafte Auswahl von Stemmstücken und damit eine effiziente Befestigung von derartigen Bauteilen mit nur geringen Variationen der Befestigungsqualität.

## Patentansprüche

1. Verfahren zum Befestigen einer Vielzahl von gleichartigen Bauteilen (TSO, TS1) durch Verspannung mittels unterschiedlicher Stemmstücke (STO, ST1, ST2), wobei
a) ein erstes Bauteil (TS1) durch einen Aktuator (AK) gegen ein erstes Stemmstück (ST1) kraftschlüssig verspannt wird, wobei durch einen ersten Sensor (S1) während des Verspannungsvorgangs ein erster Verspannungsparameter (VP1) gemessen wird,
b) abhängig vom ersten Verspannungsparameter (VP1) ein zweites Stemmstück (ST2) selektiert wird, und
c) durch den Aktuator (AK) ein zweites Bauteil gegen das selektierte zweite Stemmstück (ST2) kraftschlüssig verspannt wird.

2. Verfahren nach Anspruch 1, **dadurch gekennzeichnet,**
**dass** während des Verspannungsvorgangs ein zeitlicher und/oder wegabhängiger Verlauf des ersten Verspannungsparameters (VP1) gemessen und ausgewertet wird, und
**dass** die Selektion des zweiten Stemmstücks (ST2) abhängig vom erfassten Verlauf erfolgt.

3. Verfahren nach einem der vorhergehenden Ansprüche, **dadurch gekennzeichnet,**
**dass** der erste Verspannungsparameter (VP1) mit einem oder mehreren vorgegebenen Soll-Verspannungsparametern (SVP) verglichen wird, und
**dass** die Selektion des zweiten Stemmstücks (ST2) abhängig vom Vergleichsergebnis erfolgt.

4. Verfahren nach einem der vorhergehenden Ansprüche, **dadurch gekennzeichnet,**
**dass** aus dem ersten Verspannungsparameter (VP1) und einem oder mehreren früher gemessenen Verspannungsparametern ein Änderungstrend für den Verspannungsparameter ermittelt wird, und
**dass** die Selektion des zweiten Stemmstücks (ST2) abhängig vom Änderungstrend erfolgt.

5. Verfahren nach Anspruch 4, **dadurch gekennzeichnet, dass** geprüft wird, ob der Änderungstrend ein vorgegebenes Unstetigkeitskriterium erfüllt, und falls dies zutrifft die Selektion des zweiten Stemmstücks (ST2) modifiziert wird.

6. Verfahren nach einem der vorhergehenden Ansprüche, **dadurch gekennzeichnet,**
**dass** durch einen zweiten Sensor (S2) ein Befestigungsparameter (BP1) des ersten Bauteils (TS1) gemessen wird, und
**dass** die Selektion des zweiten Stemmstücks (ST2) abhängig vom Befestigungsparameter (BP1) erfolgt.

7. Verfahren nach Anspruch 6, **dadurch gekennzeichnet,**
**dass** eine maschinelle Lernroutine (NN) für die unterschiedlichen Stemmstücke anhand einer Vielzahl von gemessenen Verspannungsparametern (VP) und Befestigungsparame-tern (BP) darauf trainiert wird, Verspannungsparameter zu ermitteln, die eine Befestigungsqualität optimieren,
**dass** der erste Verspannungsparameter (VP1) mit dem die Befestigungsqualität für das erste Stemmstück (ST1) optimierenden Verspannungsparameter verglichen wird, und
**dass** die Selektion des zweiten Stemmstücks (ST2) abhängig vom Vergleichsergebnis erfolgt.

8. Verfahren nach einem der vorhergehenden Ansprüche, **dadurch gekennzeichnet, dass**
der Aktuator (AK) derart angesteuert wird, dass abhängig vom ersten Verspannungsparameter (VP1) der Verspannungsvorgang des zweiten Bauteils gegenüber dem Verspannungsvorgang des ersten Bauteils (TS1) verändert wird.

9. Verfahren nach einem der vorhergehenden Ansprüche, **dadurch gekennzeichnet,**
**dass** geprüft wird, ob der erste Verspannungsparameter (VP1) in einem vorgegebenen Toleranzbereich liegt,
**dass** infolge eines negativen Prüfungsergebnisses das erste Stemmstück (ST1) mittels des Aktuators (AK) entfernt wird, dass abhängig vom ersten Verspannungsparameter (VP1) ein zweites Stemmstück (ST2) selektiert wird, und
**dass** durch den Aktuator (AK) das erste Bauteil (TS1) gegen das selektierte zweite Stemmstück (ST2) kraftschlüssig verspannt wird

10. Verfahren nach einem der vorhergehenden Ansprüche,
**dadurch gekennzeichnet, dass**
der Aktuator (AK) den ersten Sensor (S1) und/oder den zweiten Sensor (S2) umfasst.

11. Verfahren nach einem der vorhergehenden Ansprüche,
**dadurch gekennzeichnet, dass**
die Verspannung durch Hammerschläge und/oder kontinuierliche Kraftaufbringung des Aktuators (AK) erfolgt.

12. Anordnung zum Befestigen einer Vielzahl von gleichartigen Bauteilen (TSO, TS1) durch Verspannung mittels unterschiedlicher Stemmstücke (STO, ST1, ST2), mit
a) einem Aktuator (AK) zum kraftschlüssigen Verspannen eines ersten Bauteils (TS1) gegen ein erstes Stemmstück (ST1),
b) einem ersten Sensor (S1) zum Messen eines ersten Verspannungsparameters (VP1) während des Verspannungsvorgangs des ersten Stemmstücks (ST1) sowie
c) einem Selektionsmodul (SEL) zum Selektieren eines zweiten Stemmstücks (ST2) abhängig vom ersten Verspannungsparameter (VP1), und
d) wobei der Aktuator (AK) dazu eingerichtet ist, ein zweites Bauteil gegen das selektierte zweite Stemmstück (ST2) kraftschlüssig zu verspannen.

13. Computerprogrammprodukt eingerichtet zum Ausführen eines Verfahrens nach einem der Ansprüche 1 bis 11 mittels einer Anordnung nach Anspruch 12.

14. Computerlesbares Speichermedium mit einem Computerprogrammprodukt nach Anspruch 13.

## Claims

1. Method for fastening a multiplicity of components (TSO, TS1) of the same type by bracing by means of dissimilar caulking pieces (STO, ST1, ST2), wherein
a) a first component (TS1) by an actuator (AK) is braced in a force-fitting manner in relation to a first caulking piece (ST1), wherein a first bracing parameter (VP1) is measured by a first sensor (S1) during the bracing procedure;
b) a second caulking piece (ST2) is selected so as to depend on the first bracing parameter (VP1); and
c) a second component by the actuator (AK) is braced in a force-fitting manner in relation to the selected second caulking piece (ST2).

2. Method according to Claim 1, **characterized in that** during the bracing procedure a temporal and/or path-dependent profile of the first bracing parameter (VP1) is measured and evaluated, and **in that** the selection of the second caulking piece (ST2) is performed so as to depend on the profile detected.

3. Method according to one of the preceding claims, **characterized in that**
the first bracing parameter (VP1) is compared to one or a plurality of predefined nominal bracing parameters (SVP); and **in that**
the selection of the second caulking piece (ST2) is performed so as to depend on the result of the comparison.

4. Method according to one of the preceding claims, **characterized in that**
a variation trend for the bracing parameter is determined from the first bracing parameter (VP1) and one or a plurality of bracing parameters measured earlier; and
**in that**
the selection of the second caulking piece (ST2) is performed so as to depend on the variation trend.

5. Method according to Claim 4, **characterized in that**
it is verified whether the variation trend meets a predefined inconsistency criterion and, in the affirmative, the selection of the second caulking piece (ST2) is modified.

6. Method according to one of the preceding claims, **characterized in that**
a fastening parameter (BP1) of the first component (TS1) is measured by a second sensor (S2), and
**in that**
the selection of the second caulking piece (ST2) is performed so as to depend on the fastening parameter (BP1).

7. Method according to Claim 6, **characterized in that**
a machine-based learning routine (NN) for the dissimilar caulking pieces is taught by means of a multiplicity of measured bracing parameters (VP) and fastening parameters (BP) with a view to determining bracing parameters which optimize a fastening quality;
**in that**
the first bracing parameter (VP1) is compared to the bracing parameter that optimizes the fastening quality for the first caulking piece (ST1); and
**in that**
the selection of the second caulking piece (ST2) is performed so as to depend on the result of the comparison.

8. Method according to one of the preceding claims, **characterized in that**
the actuator (AK) is actuated in such a manner that the bracing procedure of the second component is varied in relation to the bracing procedure of the first component (TS1) so as to depend on the first bracing parameter (VP1).

9. Method according to one of the preceding claims, **characterized in that**
it is verified whether the first bracing parameter (VP1) lies in a predefined tolerance range;
**in that**
as a result of a negative verification result the first caulking piece (ST1) is removed by means of the actuator (AK); **in that**
a second caulking piece (ST2) is selected so as to be depend on the first bracing parameter (VP1); and
**in that**
the first component (TS1) by the actuator (AK) is braced in a force-fitting manner in relation to the selected second caulking piece (ST2).

10. Method according to one of the preceding claims, **characterized in that**
the actuator (AK) comprises the first sensor (S1) and/or the second sensor (S2).

11. Method according to one of the preceding claims, **characterized in that**
the bracing is performed by hammer blows and/or a continuous application of force by the actuator (AK).

12. Assembly for fastening a multiplicity of components (TSO, TS1) of the same type by bracing by means of dissimilar caulking pieces (STO, ST1, ST2),
a) an actuator (AK) for bracing in a force-fitting manner a first component (TS1) in relation to a first caulking piece (ST1);
b) a first sensor (S1) for measuring a first bracing parameter (VP1) during the bracing procedure of the first caulking piece (ST1); as well as
c) a selection module (SEL) for selecting a second caulking piece (ST2) so as to depend on the first bracing parameter (VP1); and
d) wherein the actuator (AK) is specified for bracing in a force-fitting manner a second component in relation to the selected second caulking piece (ST2).

13. Computer program product specified for executing a method according to one of Claims 1 to 11 by means of an assembly according to Claim 12.

14. Computer-readable storage medium having a computer program product according to Claim 13.

## Revendications

1. Procédé de fixation d'une multiplicité de composants analogues (TSO, TS1) par serrage au moyen de différentes pièces à mater (STO, ST1, ST2), dans lequel
a) un premier composant (TS1) est serré par friction par un actionneur (AK) contre une première pièce à mater (ST1),
un premier paramètre de serrage (VP1) étant mesuré par un premier capteur (S1) pendant le processus de serrage,
b) en fonction du premier paramètre de serrage (VP1), une deuxième pièce à mater (ST2) est sélectionnée, et
c) un deuxième composant est serré par friction par l'actionneur (AK) contre la deuxième pièce à mater sélectionnée (ST2).

2. Procédé selon la revendication 1, **caractérisé**
**en ce qu'**une évolution temporelle et/ou en fonction de la course du premier paramètre de serrage (VP1) est mesurée et évaluée pendant le processus de serrage, et
**en ce que** la sélection de la deuxième pièce à mater (ST2) dépend de l'évolution enregistrée.

3. Procédé selon l'une des revendications précédentes, **caractérisé**
**en ce que** le premier paramètre de serrage (VP1) est comparé à un ou plusieurs paramètres de serrage cibles prédéterminés (SVP), et
**en ce que** la sélection de la deuxième pièce à mater (ST2) dépend du résultat de la comparaison.

4. Procédé selon l'une des revendications précédentes, **caractérisé**
**en ce qu'**une tendance de variation pour le paramètre de serrage est déterminée à partir du premier paramètre de serrage (VP1) et d'un ou plusieurs paramètres de serrage mesurés précédemment,
**en ce que** la sélection de la deuxième pièce à mater (ST2) dépend de la tendance de variation.

5. Procédé selon la revendication 4, **caractérisé en ce que** l'on vérifie si la tendance de variation répond à un critère de discontinuité prédéterminé, et si c'est le cas, la sélection de la deuxième pièce à mater (ST2) est modifiée.

6. Procédé selon l'une des revendications précédentes, **caractérisé**
**en ce qu'**un paramètre de fixation (BPI) du premier composant (TS1) est mesuré par un deuxième capteur (S2), et en ce que la sélection de la deuxième pièce à mater (ST2) dépend du paramètre de fixation (BPI).

7. Procédé selon la revendication 6, **caractérisé en ce qu'**un programme d'apprentissage automatique (NN) pour les différentes pièces à mater est formé sur la base d'une multiplicité de paramètres de serrage mesurés (VP) et de paramètres de fixation (BP) pour déterminer des paramètres de serrage qui optimisent une qualité de fixation,
**en ce que** le premier paramètre de serrage (VP1) est comparé au paramètre de serrage qui optimise la qualité de fixation pour la première pièce à mater (ST1), et **en ce que** la sélection de la deuxième pièce à mater (ST2) dépend du résultat de la comparaison.

8. Procédé selon l'une des revendications précédentes, **caractérisé en ce que** l'actionneur (AK) est commandé de telle sorte qu'en fonction du premier paramètre de serrage (VP1), le processus de serrage du deuxième composant est modifié par rapport au processus de serrage du premier composant (TS1).

9. Procédé selon l'une des revendications précédentes, **caractérisé**
**en ce que** l'on vérifie si le premier paramètre de serrage (VP1) se situe dans une plage de tolérance prédéterminée,
**en ce qu'**à la suite d'un résultat de test négatif, la première pièce à mater (ST1) est retirée au moyen de l'actionneur (AK), en ce qu'une deuxième pièce à mater (ST2) est sélectionnée en fonction du premier paramètre de serrage (VP1), et
**en ce que** l'actionneur (AK) serre le premier composant (TS1) contre la deuxième pièce à mater sélectionnée (ST2) par friction.

10. Procédé selon l'une des revendications précédentes, **caractérisé en ce que** l'actionneur (AK) comprend le premier capteur (S1) et/ou le deuxième capteur (S2).

11. Procédé selon l'une des revendications précédentes, **caractérisé en ce que**
le serrage a lieu par martelage et/ou application continue d'une force par l'actionneur (AK).

12. Dispositif de fixation d'une multiplicité de composants analogues (TSO, TS1) par serrage au moyen de différentes pièces à mater (STO, ST1, ST2), comprenant
a) un actionneur (AK) destiné à serrer par friction un premier composant (TS1) contre une première pièce à mater (ST1),
b)un premier capteur (S1) destiné à mesurer un premier paramètre de serrage (VP1) pendant le processus de serrage de la première pièce à mater (ST1) et
c) un module de sélection (SEL) destiné à sélectionner une deuxième pièce à mater (ST2) en fonction du premier paramètre de serrage (VP1), et
d) dans lequel l'actionneur (AK) est conçu pour serrer par friction un deuxième composant contre la deuxième pièce à mater sélectionnée (ST2).

13. Produit de programme informatique conçu pour exécuter un procédé selon l'une des revendications 1 à 11 au moyen d'un dispositif selon la revendication 12.

14. Support de stockage lisible par ordinateur comprenant un produit de programme informatique selon la revendication 13.
